# FASCICULE DE BREVET EUROPEEN

(11) **EP 3 386 623 B1**
(45) Date de publication et mention de la délivrance du brevet: **25.10.2023**
(21) Numéro de dépôt: 16794574.0
(22) Date de dépôt: 08.11.2016
(51) Int. Cl.: B01J 8/18, B01J 8/22, B01J 8/00, C10G 2/00

(54) **CHARGEMENT D'UN CATALYSEUR DANS UNE COLONNE A BULLES POUR LA SYNTHESE FISCHER-TROPSCH**
LADEN EINES KATALYSATORS IN EINE BLASENKOLONNE FÜR FISCHER-TROPSCH-SYNTHESE
LOADING A CATALYST INTO A BUBBLE COLUMN FOR FISCHER-TROPSCH SYNTHESIS

(30) Priorité: 08.12.2015 FR 1562031
(43) Date de publication de la demande: 17.10.2018
(73) Titulaire: IFP Energies nouvelles, 92500 Rueil-Malmaison (FR)
(72) Inventeur: DESGRANGES, Régis, 38300 Bourgoin Jallieu (FR); HERAUD, Jean-Philippe, 69780 Saint Pierre de Chandieu (FR); VIGUIE, Jean-Christophe, 69006 Lyon (FR); BOUCHER, Sébastien, 78630 Orgeval (FR); DELLA TORRE, Chiara, 20161 Milano (IT); MIGNONE, Elsa, 20900 Monza (IT)
(74) Mandataire: IFP Energies nouvelles
(86) Numéro de dépôt international: PCT/EP2016/076938
(87) Numéro de publication internationale: WO 2017/097525

(56) Documents cités:
- EP-A1- 2 194 111
- WO-A1-03/068715
- WO-A1-2005/026293
- WO-A2-02/059232
- FR-A1- 2 991 991
- PENDYALA VENKAT RAMANA ET AL: "Fischer-Tropsch Synthesis: Effect of Start-Up Solvent in a Slurry Reactor", CATALYSIS LETTERS, SPRINGER NEW YORK LLC, UNITED STATES, vol. 143, no. 5, 15 mars 2013 (2013-03-15) , pages 395-400, XP035372713, ISSN: 1011-372X, DOI: 10.1007/S10562-013-0991-9 [extrait le 2013-03-15]

## Description

### Domaine technique

La présente invention se rapporte au domaine des procédés de synthèse Fischer-Tropsch et notamment au chargement d'un catalyseur dans une colonne à bulles pour la synthèse Fischer-Tropsch.

### Etat de la technique

Les procédés de synthèse Fischer-Tropsch permettent d'obtenir une large gamme de coupes hydrocarbonées à partir du mélange CO + H₂, communément appelé gaz de synthèse. L'équation globale de la synthèse Fischer-Tropsch peut s'écrire de la manière suivante :

n CO + (2n+1) H₂ → CₙH₂ₙ₊₂ + n H₂O

La réaction Fischer-Tropsch se déroule typiquement entre 1 et 4 MPa, à une température comprise généralement entre 200°C et 350°C. La synthèse Fischer-Tropsch est au coeur des procédés de conversion du gaz naturel, du charbon ou de la biomasse en carburants ou en intermédiaires pour l'industrie chimique. Ces procédés sont appelés GTL (« *Gas to Liquids* » selon la terminologie anglo-saxonne) dans le cas de l'utilisation de gaz naturel comme charge initiale, CTL *(« Coal to Liquids* » selon la terminologie anglo-saxonne) pour le charbon, et BTL (« *Biomass to Liquids* » selon la terminologie anglo-saxonne) pour la biomasse.

Dans le cas des procédés CTL et BTL, la charge initiale est tout d'abord gazéifiée en gaz de synthèse, un mélange de monoxyde de carbone et de dihydrogène. Dans le cas des procédés GTL, le méthane est converti en gaz de synthèse le plus souvent dans un appareil de reformage autothermique. Le gaz de synthèse est ensuite transformé majoritairement en paraffines grâce à la synthèse Fischer-Tropsch, et ces paraffines peuvent ensuite être transformées en carburants par un procédé d'hydroisomérisation-hydrocraquage. Par exemple, des procédés de transformation tels que l'hydrocraquage, le déparaffinage, et l'hydroisomérisation de ces paraffines permettent de produire différents types de carburants dans la gamme des distillats moyens : kérosène (coupe 150-250°C) et gazole (coupe 250-370°C). Les fractions plus légères C5-C15 peuvent être distillées et utilisées comme solvants ou comme charge dans certaines applications de la pétrochimie.

La réaction de synthèse Fischer-Tropsch peut être réalisée dans différents types de réacteurs (lit fixe, mobile (appelé aussi lit fluidisé), ou triphasique (gaz, liquide, solide), ou en colonne à bulles), et les produits de la réaction présentent notamment la caractéristique d'être exempts de composés soufrés, azotés ou de type aromatique.

Dans une mise en oeuvre dans un réacteur de type colonne à bulles (ou « *slurry bubble column* » selon la terminologie anglaise, ou encore « *slurry* » dans une expression simplifiée), la mise en oeuvre du catalyseur est caractérisée par le fait que celui-ci est divisé à l'état de poudre très fines, typiquement de l'ordre de quelques dizaines de micromètres, cette poudre formant une suspension avec le milieu réactionnel.

Lors de la mise en oeuvre du catalyseur dans les procédés de synthèse Fischer-Tropsch de type « *slurry* » tels que définis précédemment, le catalyseur est soumis à des conditions particulièrement sévères en terme de stress mécanique et chimique pouvant endommager le catalyseur et donc altérer ses performances catalytiques, et notamment son activité.

Par ailleurs, le catalyseur peut être également endommagé en amont de sa mise en oeuvre, et plus particulièrement lors de la phase de chargement du catalyseur dans le réacteur, et aussi lors de la phase de démarrage du réacteur. En effet, dans le cadre de la synthèse Fischer-Tropsch, le catalyseur doit être sous forme réduite pour être catalytiquement actif ; ainsi un chargement non optimal du catalyseur dans le réacteur de synthèse peut entraîner son oxydation au moins partielle, ce qui aura pour conséquence de réduire inévitablement son activité.

Le document US2007/254968 divulgue une méthode pour le chargement d'un catalyseur Fischer-Tropsch dans un réacteur de synthèse permettant de réduire son endommagement lors de la phase de chargement. Avant d'être inséré dans le réacteur de synthèse, le catalyseur est préalablement mélangé avec un liquide pour former un mélange solide/liquide dans une unité de stockage, le mélange étant ensuite envoyé dans le réacteur de synthèse au moyen d'une pompe. Cependant, l'utilisation d'une pompe lors du transfert du catalyseur de l'unité de stockage vers le réacteur de synthèse peut endommager de manière irréversible le catalyseur par destruction mécanique. Par ailleurs, la pompe elle-même peut être endommagée lors du transfert du catalyseur par abrasion mécanique. Enfin, l'absence de pompe limite la formation de fines, et permet d'augmenter le rendement en produits issus de la réaction Fischer-Tropsch.

Le document US6,512,017 divulgue un procédé de chargement d'un catalyseur Fischer-Tropsch dans un réacteur de synthèse dans lequel le catalyseur est protégé lors du chargement par une cire liquide. L'état liquide de la cire nécessite de chauffer le réacteur à une température supérieure à 150°C.

Le document WO2005/026293 divulgue un procédé de chargement d'un catalyseur dans un réacteur de synthèse comprenant les étapes suivantes :
a) on incorpore le catalyseur, préalablement réduit, dans une cire de paraffine qui est solide à température ambiante ;
b) on fait fondre la cire de paraffine dans une capacité maintenue à haute température, ensemble avec un solvant qui est miscible avec la cire de paraffine fondue et qui est liquide à la fois dans les conditions opératoires de la capacité et à température ambiante, et on envoie un flux de gaz inerte pour obtenir une suspension homogène ;
c) on met sous pression la capacité à une pression supérieure à celle du réacteur de synthèse ;
d) on transfère, due à la différence de pression, la solution diluée contenue dans la capacité vers le réacteur de synthèse, initialement vide, qui est maintenu à une température supérieure ou égale à la température de la capacité ;
e) on répète les étapes a) à d) jusqu'à ce que soit obtenu dans le réacteur un niveau de suspension qui soit suffisant pour atteindre la boucle de séparation prévue pour le traitement de la suspension ;
f) on répète l'ensemble des étapes a) à d) jusqu'à ce que soit atteint un niveau d'exploitation normal dans le réacteur et dans la boucle de séparation ;
g) on achemine le gaz de synthèse dans le réacteur.

Dans ce contexte, un objectif de la présente invention est de proposer un procédé de chargement d'un catalyseur de Fischer-Tropsch dans un réacteur de synthèse permettant de répondre aux inconvénients exposés ci-avant. Le procédé selon l'invention permet de charger un catalyseur de Fischer-Tropsch dans un réacteur de synthèse sans faire recours à une pompe, et donc permet de limiter la formation de fines de catalyseur tout en augmentant le rendement en produits issus de la synthèse de Fischer-Tropsch. Par ailleurs, le chargement du catalyseur dans le réacteur de synthèse est réalisé à une température plus basse que ceux décrits dans l'état de la technique, ce qui permet d'obtenir un procédé beaucoup moins énergivore.

### Objets de l'invention

La présente invention a pour objet un procédé de chargement d'un catalyseur dans un réacteur de synthèse, de type colonne à bulles, comprenant une boucle de séparation, lequel procédé comprenant les étapes suivantes :
a) on remplit au moins en partie le réacteur de synthèse avec un solvant S1 ;
b) on remplit au moins en partie la boucle de séparation dudit réacteur de synthèse avec ledit solvant S1 ;
c) on fait circuler ledit solvant S1 depuis le réacteur de synthèse vers la boucle de séparation et de la boucle de séparation vers le réacteur de synthèse ;
d) on chauffe le réacteur de synthèse à une température inférieure ou égale à 80°C;
e) on injecte en fond du réacteur de synthèse un gaz inerte et on augmente la pression du réacteur de synthèse de manière à atteindre une pression absolue comprise entre 0,1 et 0,6 MPa ;
f) on mélange ledit catalyseur avec un solvant S2 dans une capacité pour obtenir un mélange liquide/solide ;
g) on augmente la pression dans la capacité à une pression supérieure d'au moins 0,2 MPa par rapport à la pression du réacteur de synthèse, puis on envoie le mélange liquide/solide obtenu à l'étape f) vers le réacteur de synthèse ;
h) on soutire au moins en partie ledit solvant S1 et/ou S2 compris dans le réacteur de synthèse et/ou dans la boucle de séparation, caractérisé en ce que le catalyseur de l'étape f) est préalablement réduit dans un réacteur de réduction (20) puis est refroidit à une température inférieure ou égale à 80°C.

Avantageusement, le solvant S1 est identique au solvant S2.

De préférence, le solvant S1 et/ou le solvant S2 sont choisis parmi les solvants polyalphaoléfines hydrogénés ou les solvants isoparaffinique hydrogénés. Avantageusement, le procédé selon l'invention comprend en outre après l'étape h) les étapes suivantes :
i) on chauffe le réacteur de synthèse à une température comprise entre 150 et 270°C ;
j) on augmente la pression du réacteur de synthèse de manière à atteindre une pression absolue comprise entre 1,0 et 6,0 MPa ;
k) on injecte en fond du réacteur de synthèse un gaz de synthèse en remplacement du gaz inerte injecté à l'étape e).

De préférence, la boucle de séparation comprend au moins un ballon de dégazage et un décanteur.

Avantageusement, on soutire à l'étape h) au moins en partie ledit solvant S1 et/ou S2 via le décanteur.

De préférence, le gaz inerte injecté à l'étape e) est récupéré en tête du réacteur de synthèse puis est recyclé en fond dudit réacteur de synthèse.

Avantageusement, le catalyseur se présente sous la forme de particules de taille compris entre 10 et 500 micromètres.

De préférence, la quantité de solvant S2 utilisée est déterminée de manière à ne pas dépasser une concentration en solide supérieure à 50% en poids dans la capacité.

Avantageusement, l'étape de réduction est réalisée en présence d'un gaz réducteur à une pression comprise entre 0 et 1,5 MPa, et à une température finale de réduction comprise entre 350°C et 500°C.

Avantageusement, le niveau de remplissage du solvant S1 à l'étape b) dans le ballon de dégazage et/ou dans le décanteur est d'au moins 10% en volume par rapport au volume total respectivement du ballon de dégazage et/ou du décanteur.

### Description détaillée de l'invention

La description ci-après illustre les différentes étapes pour le chargement d'un catalyseur de type Fischer-Tropsch dans un réacteur de synthèse de type colonne à bulles.

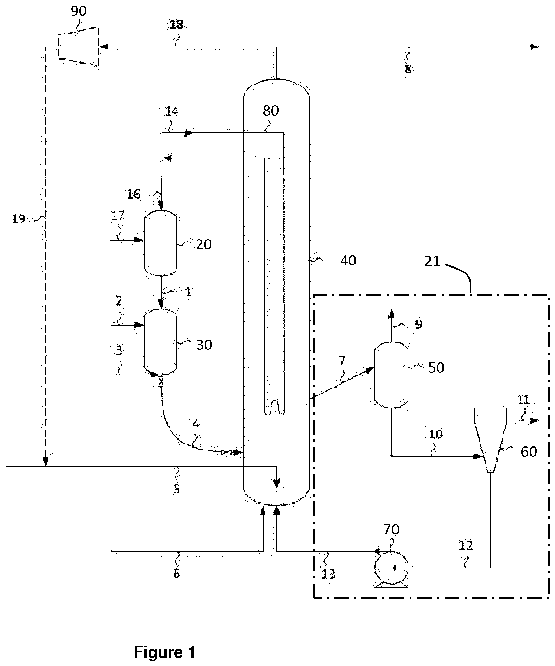

La figure 1 est une représentation détaillée d'un procédé de chargement d'un catalyseur Fischer-Tropsch selon l'invention, ledit catalyseur étant chargé dans un réacteur de synthèse **40,** et plus particulièrement de type colonne à bulles.

Le réacteur de synthèse **40,** de type colonnes à bulles, est vide à l'état initial, i.e. qu'il ne comprend pas de catalyseur avant le chargement dudit catalyseur dans ledit réacteur de synthèse **40.** Avantageusement, le réacteur de synthèse **40** comprend un échangeur de chaleur **80,** par exemple un système de tubes, afin de refroidir le milieu réactionnel notamment lors de la synthèse réactionnelle de type Fischer-Tropsch qui est exothermique. Dans le cadre du procédé de chargement du catalyseur dans le réacteur de synthèse selon l'invention, l'échangeur de chaleur **80** est également utilisé pour chauffer le réacteur de synthèse **40** lors de la phase de chargement du catalyseur du réacteur de synthèse **40** (cf. plus particulièrement l'étape d) du procédé selon l'invention dans le cadre du chargement du catalyseur dans le réacteur de synthèse).

Selon l'invention, le chargement du catalyseur dans le réacteur de synthèse **40** comprend au moins les étapes suivantes :
a) on remplit au moins en partie le réacteur de synthèse **40** avec un solvant S1 ;
b) on remplit au moins en partie la boucle de séparation **21** du réacteur de synthèse **40** avec ledit solvant S1 ;
c) on fait circuler ledit solvant S1 depuis le réacteur de synthèse **40** vers la boucle de séparation **21** et de la boucle de séparation **21** vers le réacteur de synthèse **40** ;
d) on chauffe le réacteur de synthèse **40** à une température inférieure ou égale à 80°C ;
e) on injecte en fond du réacteur de synthèse **40** un gaz inerte et on augmente la pression du réacteur de synthèse **40** de manière à atteindre une pression absolue comprise entre 0,1 et 0,6 MPa ;
f) on mélange le catalyseur avec un solvant S2, identique ou différent du solvant S1, dans une capacité **30** pour obtenir un mélange solide/liquide ;
g) on envoie le mélange solide/liquide obtenu à l'étape f) vers le réacteur de synthèse **40** ;
h) on soutire au moins en partie le solvant S1 et/ou S2 présent(s) dans le réacteur de synthèse **40** et la boucle de séparation **21,** caractérisé en ce que le catalyseur de l'étape f) est préalablement réduit dans un réacteur de réduction **20** puis est refroidit à une température inférieure ou égale à 80°C;

Avantageusement, le procédé selon l'invention comprend en outre les étapes suivantes :
i) on chauffe le réacteur de synthèse **40** à une température comprise entre 150 et 270°C ;
j) on augmente la pression du réacteur de synthèse **40** de manière à atteindre une pression absolue comprise entre 1,0 et 6,0 MPa ;
k) on injecte un gaz de synthèse en remplacement du gaz inerte.

On décrit en détail les étapes a) à k) ci-après.

### Etape a)

Selon l'étape a) du procédé selon l'invention, on remplit au moins en partie le réacteur de synthèse **40** par un solvant S1. La nature du solvant S1 doit être choisie de telle manière qu'il doit être à l'état liquide dans des conditions normales de température et de pression, définies ici par une température de 15°C (288,15 K) et une pression de 101 325 Pa, mais également dans les conditions de la synthèse Fischer-Tropsch (telle que décrite plus loin dans le texte).

Le solvant S1 est de préférence dépourvu de tous éléments polluants, i.e. que ledit solvant ne contient pas d'éléments à base de soufre, d'azote ou des composés halogénés. Avantageusement, le solvant S1 est un solvant polyalphaoléfines hydrogéné ou isoparaffinique hydrogéné, de manière à protéger le catalyseur, sous forme réduite, d'une oxydation et ainsi de maintenir les performances du catalyseur final.

Le volume de solvant S1 injecté dans le réacteur de synthèse **40** est réalisé de manière à ce que le niveau de solvant S1 soit au-dessus du niveau de la ligne de transfert 7. De préférence, le volume de solvant S1 injecté dans le réacteur de synthèse **40** est réalisé de manière à atteindre un niveau supérieur d'au moins 1 % en volume, de préférence 3 % en volume, et encore plus préférentiellement 5 % en volume, du volume total du réacteur de synthèse **40** par rapport au niveau de la sortie de la ligne de transfert **7** du réacteur de synthèse **40.**

Le solvant S1 est introduit dans le réacteur de synthèse **40** par la ligne **6,** à une température inférieure ou égale à 80 °C, de manière préférée inférieure ou égale à 60 °C et de manière encore plus préférée à température ambiante, i.e. à 15°C.

### Etape b)

Selon l'étape b) du procédé selon l'invention, on remplit la boucle de séparation **21** du réacteur de synthèse **40** avec ledit solvant S1. Dans le cadre de la présente invention, le boucle de séparation **21** comprend au moins un ballon de dégazage **50,** un décanteur **60,** et une pompe **70.**

Le ballon de dégazage **50** permet d'évacuer le surplus de gaz via la ligne **9,** le décanteur permet d'évacuer le surplus de solvants (S1 et/ou S2) via la ligne **11.**

Le réacteur de synthèse **40** est relié au ballon de dégazage **50** via la ligne de transfert **7,** le ballon de dégazage **50** est relié au décanteur **60** via la ligne **10,** le décanteur **60** est relié au réacteur de synthèse **40** via les lignes **12** et **13.**

Avantageusement, lors de l'étape de remplissage de la boucle de séparation **21,** le volume de solvant injecté dans le ballon de dégazage **50** et dans le décanteur **60** est d'au moins 10 % en volume, de préférence 30 % en volume, et encore plus préférentiellement 50 % en volume par rapport au volume total respectivement dudit ballon de dégazage **50** et dudit décanteur **60.**

### Etape c)

Selon l'étape c) du procédé selon l'invention, on démarre la pompe **70** de la boucle de séparation **21** pour assurer une circulation du solvant S1 depuis le réacteur **40** vers le dégazeur **50,** depuis le dégazeur **50** vers le décanteur **60,** et depuis le décanteur **60** vers le réacteur de synthèse **40.** La circulation du solvant S1 dans le réacteur de synthèse **40** et dans la boucle de séparation **21** permet de démarrer le réacteur de synthèse en limitant le risque de bouchage par sédimentation du catalyseur dans la boule de séparation **21,** et plus particulièrement au niveau du ballon de dégazage **50** et du décanteur **60,** en cas de problème de démarrage de la pompe **70,** et d'éviter ainsi de balayer l'ensemble de la boucle de séparation **21** par du solvant S1 et/ou S2 puis par un gaz inerte, par exemple de l'azote.

### Etape d)

Selon l'étape d) du procédé selon l'invention, on chauffe le réacteur de synthèse **40** à une température inférieure ou égale à 80°C. Pour atteindre une telle température, on injecte de l'eau chaude et/ou de la vapeur d'eau dans la ligne **14** de l'échangeur de chaleur, **80.**

### Etape e)

Selon l'étape e) du procédé selon l'invention, on injecte un gaz inerte en fond du réacteur de synthèse **40** via la ligne **5.** Avantageusement, le gaz inerte est de l'azote.

De préférence, le gaz inerte est injecté à travers un dispositif de distribution du gaz (non représenté sur la figure 1) permettant une distribution homogène du gaz sur toute la section du réacteur **40.** Le débit de gaz inerte est déterminé de manière ce que la vitesse du gaz soit supérieure à la vitesse de chute des particules de catalyseur compris dans le réacteur de synthèse **40,** lesdites particules de catalyseur étant introduites dans le réacteur de synthèse **40** à l'étape g) du procédé selon l'invention.

Par ailleurs, on augmente la pression du réacteur **40** pour atteindre une pression absolue comprise entre 0,1 et 0,6 MPa, de façon préférée entre 0,1 et 0,3 MPa.

Dans un mode de réalisation, le gaz inerte est récupéré via le conduit d'évacuation **8** des gaz.

Dans un autre mode de réalisation particulier selon l'invention, on récupère le gaz inerte via la ligne **18** située en tête du réacteur de synthèse **40** puis on recycle le gaz inerte en fond dudit réacteur **40** via les lignes **19** et **5** par l'intermédiaire d'un compresseur **90** afin de limiter la consommation dudit gaz inerte.

### Etape f)

Selon l'étape f) du procédé selon l'invention, on mélange un catalyseur avec un solvant S2 dans une capacité **30** pour obtenir un mélange solide/liquide. Le solvant S2 est approvisionné dans la capacité **30** via la ligne **2.** Le catalyseur est introduit dans la capacité **30** via la ligne **1.**

Le solvant S2 est de préférence dépourvu de tous éléments polluants, i.e. que ledit solvant ne contient pas d'éléments à base de soufre, d'azote ou des composés halogénés.

Le solvant S2 est préférentiellement identique au solvant S1 utilisé dans le réacteur de synthèse **40** et dans la boucle de séparation **21.** Plus particulièrement, le solvant S2 est un solvant polyalphaoléfines hydrogéné ou un solvant isoparaffinique hydrogéné. Le solvant S2 permet de protéger le catalyseur, qui est sous forme réduite, d'une oxydation et ainsi de conserver ses propriétés catalytiques, notamment en terme d'activité.

La quantité de solvant S2 utilisée est déterminée de manière à ne pas dépasser une concentration en solide supérieure à 50% en poids dans la capacité **30,** de façon préférée 40% en poids, et de façon plus préférée 30% en poids.

De manière analogue au réacteur synthèse **40,** on introduit au fond de la capacité **30** un gaz inerte, via la ligne **3,** pour permettre la mise en suspension du catalyseur et éviter ainsi toute sédimentation des particules solides du catalyseur pouvant entraîner un bouchage de la capacité **30.**

Dans un mode de réalisation préféré, le gaz inerte introduit via la ligne **3** est identique au inerte introduit via la ligne **5.**

### Etape g)

Selon l'étape g) du procédé selon l'invention, on transfère le mélange solide/liquide obtenu à l'étape f) de la capacité **30** vers le réacteur de synthèse **40.**

Selon un aspect essentiel du procédé selon l'invention, on augmente la pression dans la capacité **30** par le gaz inerte approvisionné via la ligne **3,** de préférence l'azote, à une pression supérieure d'au moins 0,2 MPa par rapport à la pression du réacteur, de façon préférée 0,4 MPa, et encore plus préférée 0,6 MPa. Ainsi, le transfert du mélange solide/liquide est effectué via la ligne **4** par différence de pression entre la capacité **30** et le réacteur de synthèse **40.** Le mélange solide/liquide ainsi introduit dans le réacteur de synthèse **40** comprenant le catalyseur sous formes de particules solides est mis en suspension grâce au gaz inerte injecté via la ligne **5** en fond du réacteur de synthèse **40.**

### Etape h)

Selon l'étape h) du procédé selon l'invention, on soutire au moins une partie du solvant S1 et/ou S2 contenu(s) dans le réacteur de synthèse et dans la boucle de séparation **21.** Plus particulièrement, le solvant S1 et/ou S2 est soutiré au niveau du décanteur **60** via la ligne **11** de manière à réduire le niveau de liquide dans le réacteur de synthèse **40** au niveau de liquide initial (c'est-à-dire avant l'injection du mélange solide/liquide préparé à l'étape f).

De préférence, les étapes g) et h) sont réalisées simultanément ; ainsi le solvant S1 et/ou S2 est soutiré au niveau du décanteur **60** via la ligne **11** de manière à réduire le niveau de liquide dans le réacteur de synthèse **40** au niveau de liquide initial (c'est-à-dire avant l'injection du mélange solide/liquide préparé à l'étape f) au fur et à mesure du transfert du mélange solide/liquide de la capacité **30** au réacteur de synthèse **40.**

Avantageusement, le solvant S1 et/ou S2 est recyclé (non représenté sur la figure) dans le procédé respectivement via les lignes **6** et **2.**

Avantageusement, les étapes f), g) et h) sont répétées jusqu'au chargement d'une quantité cible de catalyseur dans le réacteur de synthèse **40.**

Avantageusement, le procédé selon l'invention comprend en outre les étapes i), j) et k) ci-après.

### Etape i)

Selon l'étape i) optionnelle du procédé selon l'invention, on chauffe le réacteur de synthèse **40** à la température de la réaction de synthèse Fischer-Tropsch. Pour augmenter la température dans le réacteur de synthèse **40,** on injecte de l'eau chaude et/ou de la vapeur d'eau dans la ligne **14** de l'échangeur de chaleur **80** de façon à atteindre la température de démarrage de la synthèse Fischer-Tropsch, c'est-à-dire une température comprise entre 150°C et 270°C, de préférence entre 170°C et 250 °C, et encore plus préférentiellement entre 190°C et 230°C.

### Etape i)

Selon l'étape j) optionnelle du procédé selon l'invention, on augmente la pression du réacteur de synthèse **40** de manière à atteindre la pression opératoire de la réaction de synthèse Fischer-Tropsch, c'est-à-dire une pression absolue généralement comprise entre 1,0 et 6,0 MPa, de préférence entre 1,5 et 4,0 MPa, et encore plus préférentiellement entre 2,0 et 3,5 MPa. Le débit de gaz inerte injecté par la ligne **5** est également augmenté progressivement de manière à maintenir la même vitesse du gaz par rapport à l'étape e).

### Etape k)

Selon l'étape k) optionnelle du procédé selon l'invention, on injecte un gaz de synthèse via la ligne **5,** en remplacement du gaz inerte. Le débit de gaz de synthèse est déterminé de manière à obtenir la conversion en monoxyde de carbone cible. Avantageusement, l'injection du gaz de synthèse à haute température, i.e. à une température supérieure à 180 °C de préférence supérieure à 190 °C, permet également de se prémunir de la formation des métaux carbonyles, éventuellement issus de la réaction du monoxyde de carbone du gaz de synthèse et des métaux contenus dans le chargement, qui sont des poisons pour le catalyseur Fischer-Tropsch.

### Etape de réduction du catalyseur

Préalablement à son utilisation dans le réacteur de synthèse **40,** le catalyseur subit un traitement réducteur, par exemple sous hydrogène pur ou dilué, à haute température, destiné à activer le catalyseur et à former des particules de métal à l'état zéro valent (sous forme métallique). L'étape de réduction peut être réalisée en amont de la capacité **30** dans un réacteur de réduction **20.**

Typiquement, on forme un lit de précurseur de catalyseur, sous forme oxyde, dans le réacteur de réduction **20,** en approvisionnant ledit réacteur de réduction **20** d'un précurseur de catalyseur via la ligne **16.** Puis, on met en contact ledit précurseur de catalyseur avec un gaz réducteur, approvisionné via la ligne **17,** par circulation du flux de gaz réducteur sur le lit dudit précurseur de catalyseur de manière à réduire les oxydes métalliques. De préférence, le gaz réducteur est de l'hydrogène pur.

La réduction du précurseur de catalyseur est effectuée à une pression comprise entre 0 et 1,5 MPa et de façon préférée entre 0,3 et 1 MPa, et à une température finale de réduction comprise entre 350°C et 500°C et de façon préférée entre 400°C et 450°C.

Après l'étape de réduction, le catalyseur est refroidi à température inférieure ou égale à 80°C, de préférence inférieure ou égale à 60°C, de préférence sous atmosphère inerte. De préférence le gaz utilisé pour refroidit le catalyseur est identique que celui utilisé pour l'étape de réduction. Le catalyseur est ensuite déchargé par gravité du réacteur de réduction **20** vers la capacité **30** par l'intermédiaire de la ligne **1.**

De manière optionnelle, l'étape de refroidissement du catalyseur est effectuée dans une capacité intermédiaire (non représentée sur la figure 1) située entre la réacteur de réduction **20** et la capacité **30.**

### Catalyseur Fischer-Tropsch

Sans être limitatif, le catalyseur utilisé dans le cadre du procédé selon l'invention comprend une phase active comprenant au moins un métal du groupe VIIIB, de préférence choisi parmi le cobalt, le nickel, le ruthénium et le fer déposé sur un support. De préférence, le métal du groupe VIIIB est choisi parmi le fer ou le cobalt, et encore plus préférentiellement est le cobalt.

La phase active dudit catalyseur peut avantageusement comprendre en outre au moins un élément dopant supplémentaire choisi parmi un métal noble des groupes VIIB ou VIIIB. L'élément dopant supplémentaire permet d'améliorer la réductibilité du métal du groupe VIIIB, et donc son activité, ou sa sélectivité, ou encore de ralentir sa désactivation. Dans le cas où le dopant est choisi parmi un métal noble des groupes VIIB ou VIIIB, il est de préférence choisi parmi le platine (Pt), le palladium (Pd), le rhodium (Rh) ou encore le rhénium (Re).

Sans être limitatif, le support peut être choisi parmi les supports composés d'alumine, d'un mélange de silice et d'alumine, de silice (SiO₂), d'oxyde de titane (TiO₂), d'oxyde de zinc (ZnO).

Sans être limitatif, le catalyseur peut comprendre un ou plusieurs dopants, par exemple un composé choisit dans la liste suivante : le magnésium (Mg), le cuivre (Cu), le cobalt (Co), le nickel (Ni), l'étain (Sn), le zinc (Zn), le phosphore (P), le bore (B), le lithium (Li), le calcium (Ca), le césium (Cs), le sodium (Na), le potassium (K), le fer (Fe) et le manganèse (Mn).

### Procédé Fischer-Tropsch

Le procédé Fischer-Tropsch permet la production d'hydrocarbures essentiellement linéaires et saturés C5⁺. Conformément à l'invention, on entend par hydrocarbures essentiellement linéaires et saturés C5⁺, des hydrocarbures dont la proportion en composés hydrocarbonés ayant au moins 5 atomes de carbone par molécule représente au moins 50% en poids, de préférence au moins 80% en poids de l'ensemble des hydrocarbures formés, la teneur totale en composés oléfiniques présents parmi lesdits composés hydrocarbonés ayant au moins 5 atomes de carbone par molécule étant inférieure à 15% poids. Les hydrocarbures produits par le procédé de l'invention sont ainsi des hydrocarbures essentiellement paraffiniques, dont la fraction présentant les points d'ébullition les plus élevés peut être convertie avec un rendement élevé en distillats moyens (coupes kérosène et gazole) par un procédé catalytique d'hydroconversion tel que l'hydrocraquage et/ou l'hydroisomérisation.

De manière préférée, la charge employée pour la mise en oeuvre du procédé de l'invention, est constituée par le gaz de synthèse qui est un mélange de monoxyde de carbone et d'hydrogène de rapports molaires H₂/CO pouvant varier entre 0,5 et 4,0 en fonction du procédé de fabrication dont il est issu. Le rapport molaire H₂/CO du gaz de synthèse est généralement voisin de 3 lorsque le gaz de synthèse est obtenu à partir du procédé de vaporeformage d'hydrocarbures ou d'alcool. Le rapport molaire H₂/CO du gaz de synthèse est de l'ordre de 1,5 à 2,0 lorsque le gaz de synthèse est obtenu à partir d'un procédé d'oxydation partielle. Le rapport molaire H₂/CO du gaz de synthèse est généralement voisin de 2,5 lorsqu'il est obtenu à partir d'un procédé de reformage autotherme. Le rapport molaire H₂/CO du gaz de synthèse est généralement voisin de 1 lorsqu'il est obtenu à partir d'un procédé de gazéification et de reformage d'hydrocarbures au CO₂ (dit reformage sec).

Le procédé Fischer-Tropsch selon l'invention est opéré sous une pression totale comprise entre 1,0 et 6,0 MPa, de préférence entre 1,5 et 4,0 MPa, et encore plus préférentiellement entre 2,0 et 3,5 MPa à une température comprise entre 150 et 270°C, de préférence entre 170 et 250°C, et encore plus préférentiellement entre 190 et 230°C. La vitesse volumique horaire est avantageusement comprise entre 100 et 20000 volumes de gaz de synthèse par volume de catalyseur et par heure (100 à 20000 h⁻¹) et de préférence entre 400 et 10000 volumes de gaz de synthèse par volume de catalyseur et par heure (400 à 10000 h⁻¹).

De ce fait, la taille des grains du catalyseur utilisé dans le procédé Fischer-Tropsch peut être comprise entre quelques microns et 2 millimètres. Typiquement, pour une mise en oeuvre en réacteur triphasique « slurry » (en colonne à bulles), le catalyseur est finement divisé et se trouve sous forme de particules. La taille des particules de catalyseur sera comprise entre 10 et 500 micromètres (µm), de manière préférée entre 10 et 300 µm et de manière très préférée entre 20 et 150 µm, et de manière encore plus préférée entre 20 et 120 µm.

## Revendications

1. Procédé de chargement d'un catalyseur dans un réacteur de synthèse (40), de type colonne à bulles, comprenant une boucle de séparation (21), lequel procédé comprenant les étapes suivantes :
a) on remplit au moins en partie le réacteur de synthèse (40) avec un solvant S1;
b) on remplit au moins en partie la boucle de séparation (21) dudit réacteur de synthèse (40) avec ledit solvant S1 ;
c) on fait circuler ledit solvant S1 depuis le réacteur de synthèse (40) vers la boucle de séparation (21) et de la boucle de séparation vers le réacteur de synthèse (40) ;
d) on chauffe le réacteur de synthèse (40) à une température inférieure ou égale à 80°C ;
e) on injecte en fond du réacteur de synthèse (40) un gaz inerte et on augmente la pression du réacteur de synthèse (40) de manière à atteindre une pression absolue comprise entre 0,1 et 0,6 MPa ;
f) on mélange ledit catalyseur avec un solvant S2 dans une capacité (30) pour obtenir un mélange liquide/solide ;
g) on augmente la pression dans la capacité (30) à une pression supérieure d'au moins 0,2 MPa par rapport à la pression du réacteur de synthèse (40), puis on envoie le mélange liquide/solide obtenu à l'étape f) vers le réacteur de synthèse (40) ;
h) on soutire au moins en partie ledit solvant S1 et/ou S2 compris dans le réacteur de synthèse (40) et/ou dans la boucle de séparation (21),
**caractérisé en ce que** le catalyseur de l'étape f) est préalablement réduit dans un réacteur de réduction (20) puis est refroidit à une température inférieure ou égale à 80°C.

2. Procédé selon la revendication 1, **caractérisé en ce que** le solvant S1 est identique au solvant S2.

3. Procédé selon les revendications 1 ou 2, **caractérisé en ce que** le solvant S1 et/ou le solvant S2 sont choisis parmi les solvants polyalphaoléfines hydrogénés ou les solvants isoparaffinique hydrogénés.

4. Procédé selon l'une quelconque des revendications 1 à 3 comprenant en outre après l'étape h) les étapes suivantes :
i) on chauffe le réacteur de synthèse (40) à une température comprise entre 150 et 270°C ;
j) on augmente la pression du réacteur de synthèse (40) de manière à atteindre une pression absolue comprise entre 1,0 et 6,0 MPa ;
k) on injecte en fond du réacteur de synthèse (40) le gaz de synthèse en remplacement du gaz inerte injecté à l'étape e).

5. Procédé selon l'une quelconque des revendications 1 à 4, **caractérisé en ce que** la boucle de séparation (21) comprend au moins un ballon de dégazage (50) et un décanteur (60).

6. Procédé selon la revendication 5, **caractérisé en ce qu'**à l'étape h) on soutire au moins en partie ledit solvant S1 et/ou S2 via le décanteur (60).

7. Procédé selon l'une quelconque des revendications 1 à 6, **caractérisé en ce que** le gaz inerte injecté à l'étape e) est récupéré en tête du réacteur de synthèse (40) puis est recyclé en fond dudit réacteur de synthèse (40).

8. Procédé selon l'une quelconque des revendications 1 à 7, **caractérisé en ce que** le catalyseur se présente sous la forme de particules de taille compris entre 10 et 500 micromètres.

9. Procédé selon l'une quelconque des revendications 1 à 8, **caractérisé en ce que** la quantité de solvant S2 utilisée est déterminée de manière à ne pas dépasser une concentration en solide supérieure à 50% en poids dans la capacité (30).

10. Procédé selon la revendication 1, **caractérisé en ce que** l'étape de réduction (20) est réalisée en présence d'un gaz réducteur à une pression comprise entre 0 et 1,5 MPa, et à une température finale de réduction comprise entre 350°C et 500°C.

11. Procédé selon l'une quelconque des revendications 5 à 10, **caractérisé en ce que** le niveau de remplissage du solvant S1 à l'étape b) dans le ballon de dégazage (50) et/ou dans le décanteur (60) est d'au moins 10% en volume par rapport au volume total respectivement du ballon de dégazage (50) et/ou du décanteur (60).

## Patentansprüche

1. Verfahren zum Beladen eines Synthesereaktors (40) vom Typ Blasensäule, der eine Trennschleife (21) umfasst, mit einem Katalysator, wobei das Verfahren die folgenden Schritte umfasst:
a) zumindest teilweises Befüllen des Synthesereaktors (40) mit einem Lösungsmittel S1;
b) zumindest teilweises Befüllen der Trennschleife (21) des Synthesereaktors (40) mit dem Lösungsmittel S1;
c) Leiten des Lösungsmittels S1 vom Synthesereaktor (40) zur Trennschleife (21), und von der Trennschleife zum Synthesereaktor (40);
d) Erwärmen des Synthesereaktors (40) auf eine Temperatur von höchstens 80 °C;
e) Einleiten, am Boden des Synthesereaktors (40), eines Inertgases und Erhöhen des Drucks des Synthesereaktors (40), sodass ein Absolutdruck im Bereich von 0,1 bis 0,6 MPa erreicht wird;
f) Vermischen des Katalysators mit einem Lösungsmittel S2 in einem Behälter (30), um eine flüssig/fest-Mischung zu erhalten;
g) Erhöhen des Drucks in dem Behälter (30) auf einen Druck, welcher den Druck des Synthesereaktors (40) um mindestens 0,2 MPa übersteigt, woraufhin die flüssig/fest-Mischung, welche im Schritt f) erhalten wurde, dem Synthesereaktor (40) zugeführt wird;
h) zumindest teilweises Abziehen des Lösungsmittels S1 und/oder S2, welches im Synthesereaktor (40) und/oder in der Trennschleife (21) enthalten ist,
**dadurch gekennzeichnet, dass** der Katalysator des Schrittes f) zuvor in einem Reduktionsreaktor (20) reduziert und anschließend auf eine Temperatur von höchstens 80 °C abgekühlt wurde.

2. Verfahren nach Anspruch 1, **dadurch gekennzeichnet, dass** das Lösungsmittel S1 mit dem Lösungsmittel S2 identisch ist.

3. Verfahren nach den Ansprüchen 1 oder 2, **dadurch gekennzeichnet, dass** das Lösungsmittel S1 und/oder das Lösungsmittel S2 aus den hydrierten poly-alphaolefinartigen Lösungsmitteln oder den hydrierten isoparaffinartigen Lösungsmitteln ausgewählt sind.

4. Verfahren nach einem beliebigen der Ansprüche 1 bis 3, wobei es darüber hinaus nach dem Schritt h) die folgenden Schritte umfasst:
i) Erwärmen des Synthesereaktors (40) auf eine Temperatur im Bereich von 150 bis 270 °C;
j) Erhöhen des Drucks des Synthesereaktors (40), sodass ein Absolutdruck im Bereich von 1,0 bis 6,0 MPa erreicht wird;
k) Einleiten, am Boden des Synthesereaktors (40) des Synthesegases, um das Inertgas zu ersetzen, welches im Schritt e) eingeleitet wurde.

5. Verfahren nach einem beliebigen der Ansprüche 1 bis 4, **dadurch gekennzeichnet, dass** die Trennschleife (21) mindestens einen Gasablasskolben (50) und einen Scheidetrichter (60) umfasst.

6. Verfahren nach Anspruch 5, **dadurch gekennzeichnet, dass** im Schritt h) das Lösungsmittel S1 und/oder S2 zumindest teilweise über den Scheidetrichter (60) abgezogen werden.

7. Verfahren nach einem beliebigen der Ansprüche 1 bis 6, **dadurch gekennzeichnet, dass** das Inertgas, welches im Schritt e) eingeleitet wird, kopfseitig des Synthesereaktors (40) zurückgewonnen und anschließend zum Boden des Synthesereaktors (40) zurückgeführt wird.

8. Verfahren nach einem beliebigen der Ansprüche 1 bis 7, **dadurch gekennzeichnet, dass** der Katalysator in Form von Partikeln vorliegt, deren Größe im Bereich von 10 bis 500 Mikrometern liegt.

9. Verfahren nach einem beliebigen der Ansprüche 1 bis 8, **dadurch gekennzeichnet, dass** die verwendete Menge an Lösungsmittel S2 derart festgelegt wird, dass in dem Behälter (30) eine Konzentration an Feststoffen von mehr als 50 Gewichts-% nicht überschritten wird.

10. Verfahren nach Anspruch 1, **dadurch gekennzeichnet, dass** der Reduktionsschritt (20) in Gegenwart eines reduzierenden Gases bei einem Druck im Bereich von 0 bis 1,5 MPa und einer Reduktionsendtemperatur im Bereich von 350 °C bis 500 °C durchgeführt wird.

11. Verfahren nach einem beliebigen der Ansprüche 5 bis 10, **dadurch gekennzeichnet, dass** die Füllhöhe des Lösungsmittels S1 im Schritt b) im Gasablasskolben (50) und/oder im Scheidetrichter (60) mindestens 10 Volumen-% beträgt, bezogen auf das jeweilige Gesamtvolumen des Gasablasskolbens (50) und/oder des Scheidetrichters (60) .

## Claims

1. Method for loading a catalyst into a synthesis reactor (40) of the bubble column type comprising a separation loop (21), said method comprising the following steps:
a) filling at least a portion of the synthesis reactor (40) with a solvent S1;
b) filling at least a portion of the separation loop (21) of said synthesis reactor (40) with said solvent S1;
c) circulating said solvent S1 from the synthesis reactor (40) to the separation loop (21) and from the separation loop to the synthesis reactor (40);
d) heating the synthesis reactor (40) to a temperature of less than or equal to 80°C;
e) injecting an inert gas at the base of the synthesis reactor (40) and increasing the pressure in the synthesis reactor (40) so as to attain an absolute pressure of between 0.1 and 0.6 MPa;
f) mixing said catalyst with a solvent S2 in a vessel (30) so as to obtain a liquid/solid mixture;
g) increasing the pressure in the vessel (30) to a pressure at least 0.2 MPa higher than the pressure in the synthesis reactor (40), then sending the liquid/solid mixture obtained in step f) to the synthesis reactor (40);
h) drawing off at least a portion of said solvent S1 and/or S2 contained in the synthesis reactor (40) and or in the separation loop (21),
**characterized in that** the catalyst in step f) is first reduced in a reduction reactor (20), then cooled to a temperature of less than or equal to 80°C.

2. Method according to Claim 1, **characterized in that** solvent S1 is identical to solvent S2.

3. Method according to Claims 1 or 2, **characterized in that** solvent S1 and/or solvent S2 are selected from hydrogenated polyalphaolefin solvents or hydrogenated isoparaffinic solvents.

4. Method according to any one of Claims 1 to 3, additionally comprising after step h) the following steps:
i) heating the synthesis reactor (40) to a temperature of between 150 and 270°C;
j) increasing the pressure in the synthesis reactor (40) so as to attain an absolute pressure of between 1.0 and 6.0 MPa;
k) injecting syngas at the base of the synthesis reactor (40) to replace the inert gas injected in step e) .

5. Method according to any one of Claims 1 to 4, **characterized in that** the separation loop (21) comprises at least one degassing drum (50) and a decanter (60).

6. Method according to Claim 5, **characterized in that**, in step h), at least a portion of said solvent S1 and/or S2 is drawn off via the decanter (60).

7. Method according to any one of Claims 1 to 6, **characterized in that** the inert gas injected in step e) is recovered at the head of the synthesis reactor (40) and is then recycled to the base of said synthesis reactor (40).

8. Method according to any one of Claims 1 to 7, **characterized in that** the catalyst is in the form of particles having a size of between 10 and 500 micrometres.

9. Method according to any one of Claims 1 to 8, **characterized in that** the amount of solvent S2 used is determined such that a solids concentration of 50% by weight is not exceeded in the vessel (30).

10. Method according to Claim 1, **characterized in that** the reduction step (20) is carried out in the presence of a reducing gas at a pressure of between 0 and 1.5 MPa and at a reduction end temperature of between 350°C and 500°C.

11. Method according to any one of Claims 5 to 10, **characterized in that** the filling level of solvent S1 in step b) in the degassing drum (50) and/or in the decanter (60) is at least 10% by volume relative to the total volume respectively of the degassing drum (50) and of the decanter (60).
